# NEW EUROPEAN PATENT SPECIFICATION

(11) **EP 2 385 531 B2**
(45) Date of publication and mention of the opposition decision: **30.01.2019**
(45) Mention of the grant of the patent: 11.03.2015
(21) Application number: 10004749.7
(22) Date of filing: 05.05.2010
(51) Int. Cl.: H02G 15/18, H02H 9/00, H01B 7/00

(54) **power cable with integrated ntc thermistor**
Stromkabel mit intergrierter ntc Thermistor
Câble d'alimentation avec ntc thermistance intégré

(43) Date of publication of application: 09.11.2011
(73) Proprietor: Grundfos Management a/s, 8850 Bjerringbro (DK)
(72) Inventor: Sørensen, Michael, V., 8600 Silkeborg (DK)
(74) Representative: Hemmer, Arnd

(56) References cited:
- EP-A1- 1 450 582
- WO-A1-99/01917
- WO-A1-2008/120928
- DE-A1- 3 807 832
- DE-U1-202005 009 257
- FR-A1- 2 678 368
- GB-A- 2 014 784
- US-A- 5 675 246
- US-A1- 2007 049 120

## Description

The present invention generally relates to an electrically driven pump equipped with a power cable.

Inrush current refers to the maximum, instantaneous input current that is drawn by an electrical device at the time when it is turned on. For example, electrical power supplies may draw several times their normal full-load current when first connected to the mains. The in-rush current may be present for a short time period (this time period may be as short as 5-10 ms); however, even though the duration of the high currents is short these currents may still have a significant damaging effect on e.g. a relay that the electrical device is connected to or the electrical device it self.

It is known to protect electrical devices against high inrush currents relative to their steady state currents. This can be done by using overcurrent protection devices such as fuses and circuit breakers.

One option is to use a resistor in series with the line to limit the current. However, this approach is not an efficient way to solve the problem, because the resistor will have a voltage drop and dissipate power.

It is known to reduce inrush current by current limiters. A thermistor is a type of resistor whose resistance varies with temperature. Negative temperature coefficient thermistors are commonly used in e.g. switching power supplies, motor drives and other electrical equipment in order to prevent damage (e.g. on a relay being electrically connected to an electrical device) caused by inrush current. More specifically, a thermistor is a thermally-sensitive resistor having a resistance that varies significantly and predictably as function of the temperature of the thermistor. The resistance of a negative temperature coefficient thermistor decreases as its temperature increases.

As the inrush current limiter self heats, the current will begin to flow through the inrush current limiter and hereby warm the inrush current limiter up so that the inrush current limiters resistance will drop. Hereafter the self heated inrush current limiter will have a relative low electrical resistance. Immediately after the device is switched off, the negative temperature coefficient thermistor is still hot and therefore it will have a low electrical resistance. The negative temperature coefficient thermistor cannot limit the inrush current unless it cools for a period of time (e.g. more than 1 minute) to get a higher resistance. It is known to build in a negative temperature coefficient thermistor in a printed circuit board of an electrical device and hereby limit the inrush current.

Some electrical devices are not equipped with an inrush current limiter. Such devices may potentially damage the surrounding external equipments that they are connected to. By way of example an electrical pump without a build in inrush current limiter may cause high inrush currents that may damage the relay that the pump is electrically connected to if the pump is build in a boiler system. The present invention aims for giving an easy and safe solution to this problem.

Accordingly, it is an object of the present invention to provide an electrically driven pump having an inrush current limiter.

### Prior Art

EP 1 450 582 A2 discloses an electric heating device having an additional resistance with a negative temperature coefficient arranged in the heating cable to compensate the positive temperature coefficient of the heating cable. This additional resistance is an integral part of the heating device.

FR 2 678 368 discloses a measuring chain showing a cable including several thermistors for measuring temperature at different points.

DE 20 2005 009 257 discloses a battery cable including a resistance to make the cable short circuit proof.

This object can be achieved by an electrically driven pump having the features defined in claim 1.

Other objects and further scope of applicability of the present invention will become apparent from the claims and the description given hereinafter. It should be understood, however, that the detailed description and specific examples, while indicating preferred embodiments of the invention, are given by way of illustration only, since various changes and modifications within the spirit and scope of the invention will become apparent to those skilled in the art from this detailed description.

The pump according to the invention is equipped with a power cable comprising at least two power conductors. The cable is provided with at least one current limiting member. Thereby the current limiting member is connected with at least one of the two power conductors. The current limiting member is configured to reduce inrush current through the cable. Therefore the at least one current limiting member has a temperature depending electrical resistance. The integration of the current limiting member into the cable has the advantage that such current limiting member can be easily connected to many electrical devices without changing the electrical device itself. Thus, it is also easily possible to add such current limiting member to elder electrical devices without the need of any change in the electrical device itself. It is only necessary to replace the power cable.

In one preferred embodiment of the invention the power cable comprises at least two power conductors, at least one earth conductor, a tubular outer jacket surrounding power conductors and the at least one earth conductor, and at least one current limiting member having a negative temperature coefficient of resistance.

This construction is a simple and efficient way of providing an inrush current limiter that can be connected to an electrical device externally. This construction is preferred because this type of power cables is widely used for one phase electrical devices.

In one embodiment of the invention the power cable comprises at least two power conductors but no earth conductor, a tubular outer jacket surrounding power conductors, and at least one current limiting member having a negative temperature coefficient of resistance.

In another embodiment of the invention the current limiting member is a thermistor having a negative temperature coefficient of resistance. This embodiment offers great design freedom and hence makes it possible to produce a long range of power cables. The thermistor may be connected to the conductors at any appropriate place at the cable and the rating and characteristic of the thermistor may be selected according to specific requirements. By way of example a thermistor with a high rating (e.g. capability of handling large energy amounts) may be chosen in a high power solution while a thermistor with less rating (e.g. capability of handling large energy amounts) that may be chosen in a low power application. It may be possible to choose a thermistor having an appropriate electrical resistance corresponding to the actual situation.

In one embodiment of the invention the at least one current limiting member is connected to the cable by clamping and/or welding and/or soldering connections. This solution offers a safe, efficient and simple way of connecting the cable conductor with the current limiting member.

In a preferred embodiment according to the invention the current limiting member is integrated into the cable and the connections between the current limiting member and the cable are covered by a moulded material. Hereby it is achieved that the cable can be covered by a suitable material that secures that the connection easily can be electrically isolated from the surroundings. This may be achieved by choosing an electrically non-conduction moulded material.

In an especially preferred embodiment according to the invention the cable is covered by a polymer and/or a composite material that is injection moulded as one or several layers surrounding the electrical connection between the current limiting member (e.g. a thermistor) and the cable. The polymer and/or a composite material can secure that the connection between the current limiting member (e.g. a thermistor) and the cable is electrically isolated from the surroundings. The polymer and/or a composite material may be of any suitable type of material and can be chosen in order to meet specific requirements (e.g. safety requirements or approval related requirements). It is preferred that the electrical connection between the current limiting member (e.g. a thermistor) and the cable is covered by a polymer and/or composite material that secures that the cable is electrically isolated from the surroundings. The composite material may be any suitable material (e.g. a polymer) and it may be an advantage if the material is approved for electrical devices. Preferable the material has a high melting point and fire-resistant properties. This solution makes the power cable applicable in a wide range of areas.

In a preferred embodiment according to the invention the current limiting member is a thermistor that is connected to the cable between the end points of the cable. It is possible to integrate the current limiting member near the mid section of the cable; however, it is also possible to integrate the current limiting member near either the distal or proximal end of the cable.

In one embodiment according to the invention the at least one current limiting member is connected to at least one of the live conductors. This solution offers a simple and efficient way of providing an inrush current limiter that can be connected to an electrical device externally. It is possible to connect one current limiting member to each of the live conductors. It is also possible to connect one current limiting member to some of the live conductors (e.g. two out of the three live conductors in a three phase cable).

In one embodiment according to the invention the cable comprises one live conductor, one neutral conductor and one earth conductor. In this embodiment the current limiting member may be connected to the live conductor of the cable. This embodiment is preferred because it corresponds to a typical one phase cable.

In another embodiment according to the invention the cable comprises several live conductors (e.g. three live conductors), one neutral conductor and one earth conductor. In this embodiment one current limiting member may be connected to each of the live conductor of the cable. This embodiment is also preferred due to the fact that is corresponds to a typical multi phase cable (e.g. a three phase cable).

It is possible to have a cable that comprises several live conductors (e.g. three live conductors), one neutral conductor and one earth conductor where just one current limiting member is connected to only one of the live conductors of the cable. In some situations when dealing with a cable having three live conductors it is possible to connect just one current limiting member to only one of the live conductors. It would be a suitable solution if only one of the live conductors would be exposed to inrush current. This could be the case when dealing with an electronically driven three phase pump with an electro motor. The live conductor that is connected to the power supply may be equipped with a current limiting member, while the other live conductors (e.g. for the motor) may be used without a current limiting member.

In one embodiment according to the invention the at least one current limiting member is connected to the neutral conductor. This embodiment offers a simple and efficient way of providing an inrush current limiter that can be connected to an electrical device externally and the embodiment may be used for both one phase cables and multi phase cables.

In one embodiment according to the invention the cable comprises one live conductor, one neutral conductor and one earth conductor and the current limiting member is connected to the neutral connector of the cable.

In another embodiment according to the invention the cable comprises several live conductors (e.g. three live conductors), one neutral conductor and one earth conductor. In this embodiment one current limiting member may be connected to the one neutral conductor of the cable.

In one embodiment according to the invention the at least one current limiting member has a first leg and a second leg that is connected electrically to the cable by a clamping connection, where a first free conductor end and the first leg of the at least one current limiting member is arranged in an electrically conduction sleeve that is clamped and a second free conductor end and the second leg of the at least one current limiting member is arranged in an electrically conduction sleeve that is clamped. This embodiment is beneficial because this solution is secure, easy to handle and may be applied for all cable types and cable sizes. As an alternative to clamping connections it is possible to use welding and/or soldering connections.

In one embodiment according to the invention the power cable is provided with a plug and/or a socket. In many applications a cable that is provided with a plug and/or a socket is advantageous and in some situations it may even be necessary.

In a preferred embodiment the cable is provided with a plug in one end, where the plug is adapted to be connected to or received by an electrical device. This embodiment is preferred due to the fact that it may be adapted to fit to most electrical devices.

It is possible to have a cable with a plug and/or socket where at least one current limiting member (e.g. a thermistor) is integrated in the plug and/or socket. When the cable is equipped with a plug and/or socket it may be beneficial to integrate at least one current limiting member in the plug and/or socket instead of integrating the at least one current limiting member in the cable between the end points of the cable due to the fact that one stage of operation may be omitted. More over it would be possible to save moulding material (because both the plug and/or socket and the current limiting member in most cases should be covered by a moulding).

In one embodiment of the invention the cable is provided with a plug in a first free end and a socket in the other free end. In this embodiment a thermistor may be arranged between the plug and the socket. This offers a very easy way of providing an inrush current limiter that can be connected to an electrical device externally.

In all embodiments according to the invention it would be possible to have an earth conductor in the cable. However, in some situations it may also be possible to use the cable without an earth cable (e.g. if the electrical device is electrically isolated from the surroundings in an appropriate way).

The present invention will become more fully understood from the detailed description given herein below and the accompanying drawings which are given by way of illustration only, and thus, are not limitative of the present invention, and wherein:
- Fig. 1a: is a schematic view of one embodiment according to the invention, where a thermistor is connected to the live connector;
- Fig. 1b: is a schematic view of another embodiment according to the invention where a thermistor is connected to the neutral connector;
- Fig. 2a: is a schematic view of a third embodiment according to the invention where thermistors are connected to the live connectors in a three phase cable;
- Fig. 2b: is a schematic view of another embodiment according to the invention where a thermistor is connected to one live connectors in a three phase cable;
- Fig. 3: is a schematic view of another embodiment according to the invention where a thermistor is connected to the neutral connector in a three phase cable;
- Fig. 4: is a cross sectional view of a preferred embodiment according to the invention where a thermistor is integrated into a cable;
- Fig. 5: is another cross sectional view of the embodiment shown in Fig. 4. and
- Fig. 6: shows a preferred embodiment according to the invention where the cable is provide with a plug.

Other objects and further scope of applicability of the present invention will become apparent from the detailed description given hereinafter. It should be understood, however, that the detailed description and specific examples, while indicating preferred embodiments of the invention, are given by way of illustration only, since various changes and modifications within the spirit and scope of the invention will become apparent to those skilled in the art from this detailed description.

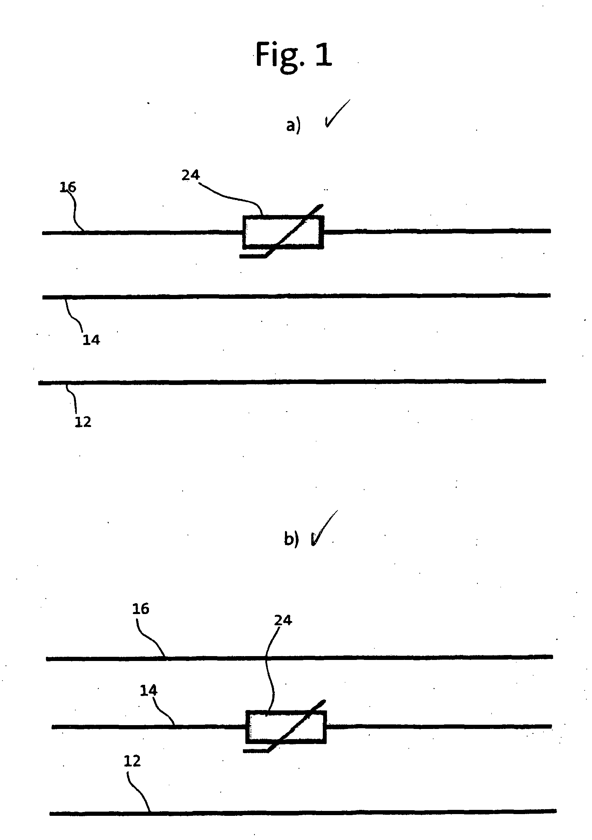

Referring now in detail to the drawings for the purpose of illustrating preferred embodiments of the present invention, a first embodiment of the power cable is schematically illustrated in Fig. 1 a. Fig. 1a shows a one phase power cable comprising an earth conductor 12, a neutral conductor 14 and a live conductor 16. The live conductor 16 has been cut and the two free ends of the live conductor 16 are electrically connected to a thermistor 24.

Fig. 1b illustrates a one phase power cable comprising an earth conductor 12, a neutral conductor 14 and a live conductor 16. The neutral conductor 14 has been cut and the two free ends of the earth conductor 14 are electrically connected to a thermistor 24.

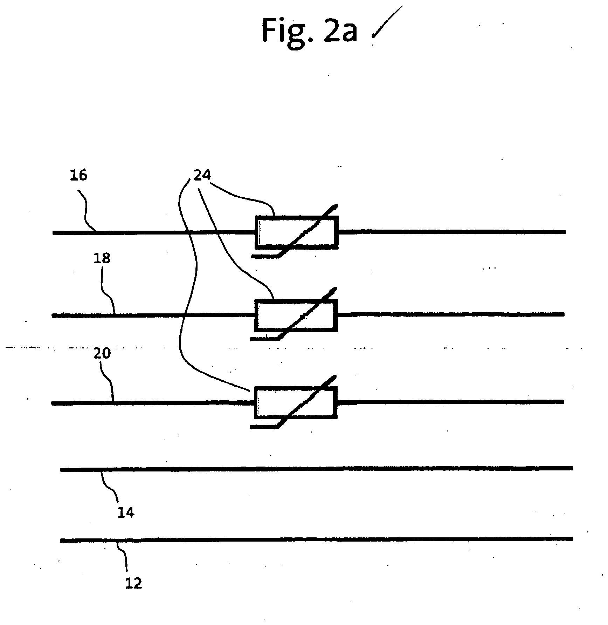

Fig. 2a shows a three phase cable comprising an earth conductor 12, a neutral conductor 14 and three live conductors 16, 18, 20. Each of the three live conductors 16, 18, 20 have been cut and in each of the three live conductors 16, 18, 20 the free ends of the live conductor 16, 18, 20 have been electrically connected to a thermistor 24. The thermistors 24 may be of equal type and have the same rating; however, the thermistors 24 may also be of different type and have different ratings.

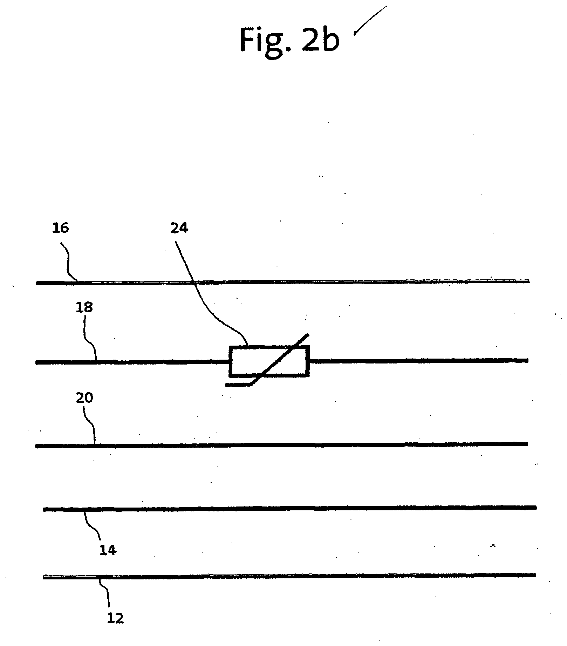

Fig. 2b illustrates a three phase cable comprising an earth conductor 12, a neutral conductor 14 and three live conductors 16, 18, 20. One of the live conductors 18 have been cut and the free end of the live conductor 18 is electrically connected to a thermistor 24. The cable shown in Fig. 2b may be uses in a situation where only one live conductor 18 is exposed to inrush current. This may be the case when dealing with an electronically driven three phase pump with an electro motor. The live conductor 18 that is connected to the power supply may be equipped with a current limiting member 24, while the other live conductors 16, 20 (e.g. for the motor) may be used without a current limiting member 24.

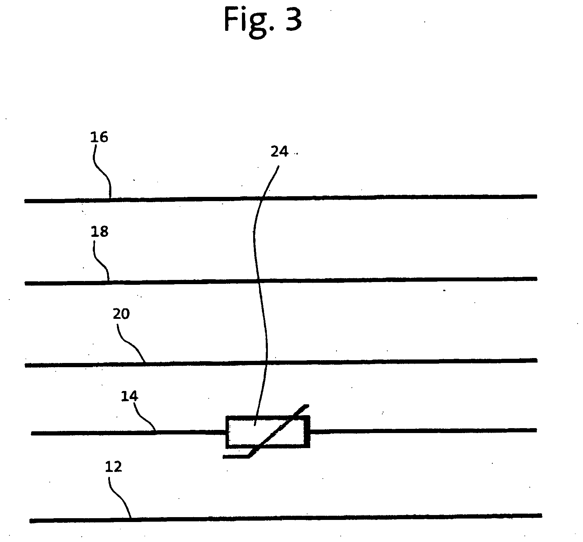

Fig. 3 illustrates another three phase power cable comprising an earth conductor 12, a neutral conductor 14 and three live conductors 16, 18, 20. The neutral conductor 14 has been cut and the two free ends of the earth conductor 14 are electrically connected to a thermistor 24. It should be noted that the thermistor 24 in Fig. 3 general speaking should have a larger rating than each of the three thermistors 24 shown on Fig. 2a if the cables are used in the same applications. By the term "larger rating" is meant that the thermistor 24 is configured to handle a larger energy amount.

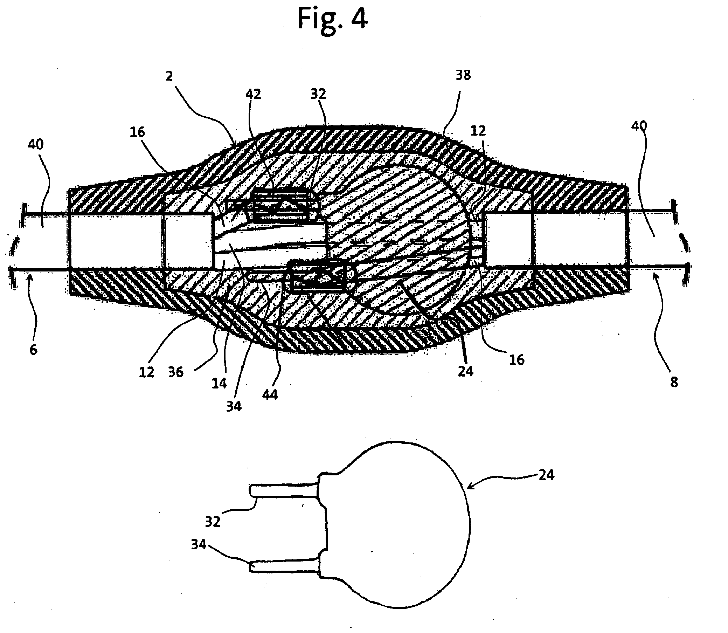

Fig. 4 shows a cross sectional view of a power cable 2 into which a thermistor 24 is integrated. Below the cable 2 is shown a thermistor 24 that not is connected to any thing (this is simply done for illustration purposes). The cable 2 comprises an earth conductor 12, a neutral conductor 14 and a live conductor 16. Each of these conductors 12, 14, 16 comprises a core having an insulating layer that surrounds the conductive core. The conductors are arranged in an outer jacket 40 that secures that the cable 2 is electrically isolated from the surroundings.

The cable 2 comprises a first cable section 6 and a second cable section 8.

The live conductor 16 has been cut and the two free ends of the live conductor 16 are electrically connected to a thermistor 24. It can be seen that the live conductor 16 from the first cable section 6 has been inserted into a first connection sleeve 42 together with the first thermistor leg 32. The first connection sleeve 42 has been clamped together so that the live conductor 16 from the first cable section 6 and the first thermistor leg 32 are electrically connected.

The live conductor 16 from the second cable section 8 has been inserted into a second connection sleeve 44 together with the second thermistor leg 34. The second connection sleeve 44 has also been clamped together so that the live conductor 16 from the second cable section 8 and the second thermistor leg 34 are electrically connected.

The thermistor 24 and the electrical connection between the thermistor 24 and the live conductor 16 are surrounded by an inner mould 36 in the form of a polymer layer. An outer mould 38 constitutes an additional layer that surrounds the inner mould 36. The moulded materials may be the same material or two different materials. In most cases the moulded materials should be electrically non-conducting. The materials may preferable be a polymer that is suitable for being injection moulded. In this way the electrical connection between the thermistor 24 and the live conductor 16 is isolated relative to the surroundings.

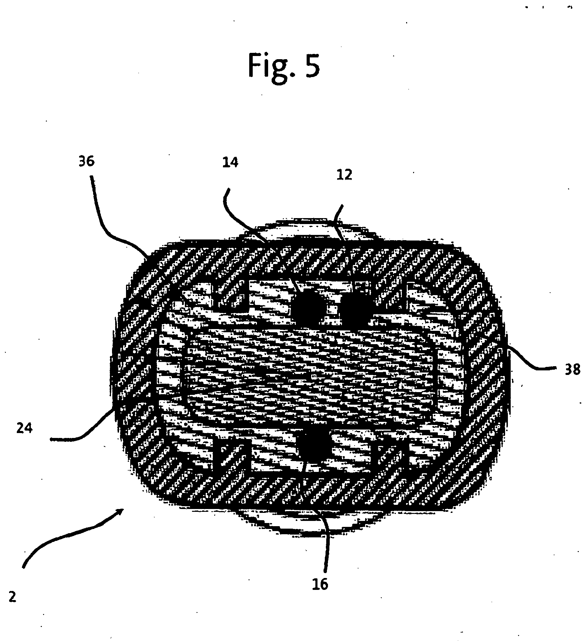

Fig. 5 illustrates another cross sectional view of the embodiment shown in Fig. 4. A thermistor 24 is arranged centrally in the power cable 2. The power cable 2 comprises an earth conductor 12 and a neutral conductor that are arranged side by side on the upper side of the thermistor 24. A live conductor 16 is arranged at the under side of the thermistor 24.

The thermistor 24 and the conductors 12, 14, 16 are surrounded by an inner mould 36 that may be made of a polymer that is injection moulded. An outer mould 38 surrounds the inner mould 36.

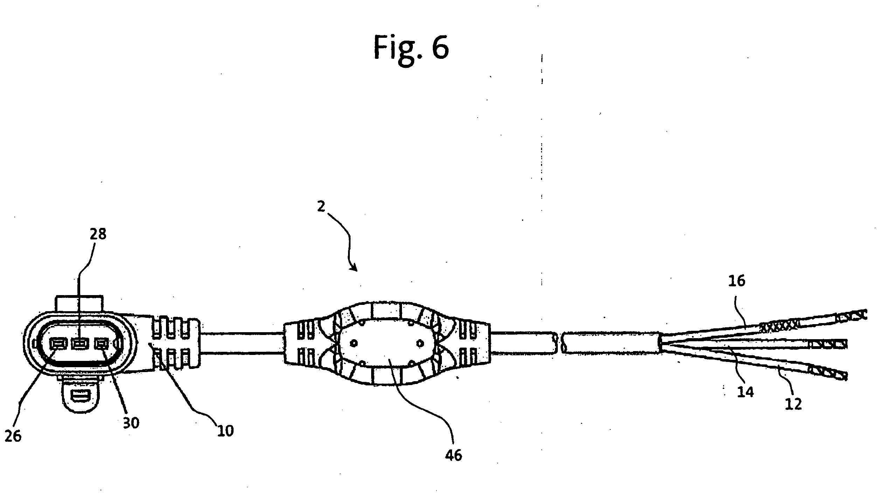

Fig. 6 shows a one phase power cable 2. The power cable 2 comprises a plug 10 that is equipped with an earth connector 26, a neutral connector 28 and a live connector 30. The plug 2 is adapted to be plugged into an electrical device such as an electric motor, an amplifier, a television or an electrical driven pump. The plug 10 is surrounded by a polymer moulded outer layer. The cable 2 comprises an inrush current limiting member 46 corresponding to the embodiment shown in Fig. 4 and in Fig. 5. The cable 2 has an earth conductor 12, a neutral conductor 14 and a live conductor.

For all the illustrated embodiments the main principle is the same. As the inrush current limiting member 46 self heats, the current will begin to flow through it and hereby warm it up so that the inrush current limiting member resistance drops. Hereafter the self heated inrush current limiting member 46 will only have relative low resistance. Immediately after the device that the cable 2 is connected to is switched off, the inrush current limiting member 46 is still hot and has a low resistance. It cannot limit the inrush current unless it cools for a period of time (e.g. more than 1 minute) to get a higher resistance.

According to the invention the cable is used to connect an electrically driven pump to the mains. In a preferred embodiment according to the invention the cable is used in an electrically driven pump that comprises electronics (e.g. for controlling a frequency converter).

### List of reference numerals

- 2: - Power cable
- 4: - Current limiting member
- 6: - First cable section
- 8: - Second cable section
- 10: - Plug
- 12: - Earth conductor
- 14: - Neutral conductor
- 16: - Live conductor
- 18: - Live conductor
- 20: - Live conductor
- 22: - Moulded connector
- 24: - Thermistor
- 26: - Earth connector
- 28: - Neutral connector
- 30: - Live connector
- 32: - First thermistor leg
- 34: - Second thermistor leg
- 36: - Inner mould
- 38: - Outer mould
- 40: - Outer jacket
- 42: - First connection sleeve
- 44: - Second connection sleeve
- 46: - Inrush current limiting member

## Claims

1. An electrically driven pump equipped with a power cable comprising at least two power conductors (14, 16) **characterised in that** the cable (2) is provided with at least one current limiting member (24) that is configured to reduce inrush current through the cable (2) and that the at least one current limiting member (24) has a temperature depending electrical resistance.

2. An electrically driven pump according to claim 1 **characterised in that** the current limiting member (24) is a thermistor (24) having a negative temperature coefficient of resistance.

3. An electrically driven pump according to claim 1 or 2 **characterised in that** the at least one current limiting member (24) is connected to the cable (2) by clamping and/or welding and or soldering connections.

4. An electrically driven pump according to one of the claims 1 to 3 **characterised in that** the current limiting member (24) is integrated into the cable (2) and that the connections between the current limiting member (24) and the cable (2) are covered by a moulded material (40,38).

5. An electrically driven pump according to one of the claims 1 to 4 **characterised in that** at least one current limiting member (24) is connected to at least one of the live conductors (16, 18, 20).

6. An electrically driven pump according to one of the claims 1 to 5 **characterised in that** at least one current limiting member (24) is connected to the neutral conductor (14).

7. An electrically driven pump according to one of the claims 1 to 6 **characterised in that** the at least one current limiting member (24) having a first leg (32) and a second leg (34) is connected electrically to the cable (2) by a clamping connection, where
- a first free conductor end and the first leg (32) of the at least one current limiting member (24) is arranged in an electrically conduction sleeve (42) that is clamped and
- a second free conductor end and the second leg (34) of the at least one current limiting member (24) is arranged in an electrically conduction sleeve (44) that is clamped.

8. An electrically driven pump according to one of the claims 1 to 7 **characterised in that** the cable (2) is provided with a plug (10) and/or a socket, wherein preferably the at least one current limiting member (24) is integrated in the plug (10) and /or the socket.

## Patentansprüche

1. Elektrisch angetriebene Pumpe, die mit einem Stromkabel ausgestattet ist, das wenigstens zwei Stromleiter (14, 16) umfasst, **dadurch gekennzeichnet, dass** das Kabel (2) mit wenigstens einem Strombegrenzungselement (24) versehen ist, das konfiguriert ist, um den Einschaltstrom durch das Kabel (2) zu reduzieren, und dass das wenigstens eine Strombegrenzungselement (24) einen temperaturabhängigen elektrischen Widerstand aufweist.

2. Elektrisch angetriebene Pumpe nach Anspruch 1, **dadurch gekennzeichnet, dass** das Strombegrenzungselement (24) ein Thermistor (24) ist, der einen negativen Temperaturkoeffizienten des Widerstands aufweist.

3. Elektrisch angetriebene Pumpe nach Anspruch 1 oder 2, **dadurch gekennzeichnet, dass** das wenigstens eine Strombegrenzungselement (24) durch Klemm- und/oder Schweiß- und/oder Lötverbindungen mit dem Kabel (2) verbunden ist.

4. Elektrisch angetriebene Pumpe nach einem der Ansprüche 1 bis 3, **dadurch gekennzeichnet, dass** das Strombegrenzungselement (24) in das Kabel (2) integriert ist und dass die Verbindungen zwischen dem Strombegrenzungselement (24) und dem Kabel (2) mit einem Formstoff (40, 38) bedeckt sind.

5. Elektrisch angetriebene Pumpe nach einem der Ansprüche 1 bis 4, **dadurch gekennzeichnet, dass** wenigstens ein Strombegrenzungselement (24) mit wenigstens einem der stromführenden Leiter (16, 18, 20) verbunden ist.

6. Elektrisch angetriebene Pumpe nach einem der Ansprüche 1 bis 5, **dadurch gekennzeichnet, dass** wenigstens ein Strombegrenzungselement (24) mit dem Neutralleiter (14) verbunden ist.

7. Elektrisch angetriebene Pumpe nach einem der Ansprüche 1 bis 6, **dadurch gekennzeichnet, dass** das wenigstens eine Strombegrenzungselement (24), das einen ersten Schenkel (32) und einen zweiten Schenkel (34) aufweist, elektrisch mit dem Kabel (2) durch eine Klemmverbindung verbunden ist, wobei
- ein erstes freies Leiterende und der erste Schenkel (32) des wenigstens einen Strombegrenzungselements (24) in einer elektrisch leitenden Hülse (42), die geklemmt ist, angeordnet ist und
- ein zweites freies Leiterende und der zweite Schenkel (34) des wenigstens einen Strombegrenzungselements (24) in einer elektrisch leitenden Hülse (44), die geklemmt ist, angeordnet ist.

8. Elektrisch angetriebene Pumpe nach einem der Ansprüche 1 bis 7, **dadurch gekennzeichnet, dass** das Kabel (2) mit einem Stecker (10) und/oder einer Buchse versehen ist, wobei vorzugsweise das wenigstens eine Strombegrenzungselement (24) in den Stecker [10) und/oder die Buchse integriert ist.

## Revendications

1. Pompe à commande électrique équipée d'un câble d'alimentation comprenant au moins deux conducteurs électriques (14, 16) **caractérisée en ce que** le câble (2) est doté d'au moins un élément limiteur de courant (24) qui est configuré pour réduire le courant d'appel à travers le câble (2) et **en ce que** l'au moins un élément limiteur de courant (24) a une résistance électrique dépendante de la température.

2. Pompe à commande électrique selon la revendication 1 **caractérisée en ce que** l'élément limiteur de courant (24) est un thermistor (24) ayant un coefficient de résistance en température négatif.

3. Pompe à commande électrique selon la revendication 1 ou 2 **caractérisée en ce que** l'au moins un élément limiteur de courant (24) est raccordé au câble (2) par des raccordements par serrage et/ou soudage et ou brasage.

4. Pompe à commande électrique selon l'une des revendications 1 à 3 **caractérisée en ce que** l'élément limiteur de courant (24) est intégré dans le câble (2) et **en ce que** les raccordements entre l'élément limiteur de courant (24) et le câble (2) sont recouverts par un matériau moulé (40, 38).

5. Pompe à commande électrique selon l'une des revendications 1 à 4 **caractérisée en ce qu'**au moins un élément limiteur de courant (24) est raccordé à au moins l'un des conducteurs sous tension (16, 18, 20).

6. Pompe à commande électrique selon l'une des revendications 1 à 5 **caractérisée en ce qu'**au moins un élément limiteur de courant (24) est raccordé au conducteur neutre (14).

7. Pompe à commande électrique selon l'une des revendications 1 à 6 **caractérisée en ce que** l'au moins un élément limiteur de courant (24) ayant une première branche (32) et une seconde branche (34) est raccordé électriquement au câble (2) par un raccordement par serrage, où
- une première extrémité libre de conducteur et la première branche (32) de l'au moins un élément limiteur de courant (24) est agencée dans un manchon de conduction électrique (42) qui est serré et
- une seconde extrémité libre de conducteur et la seconde branche (34) de l'au moins un élément limiteur de courant (24) est agencée dans un manchon de conduction électrique (44) qui est serré.

8. Pompe à commande électrique selon l'une des revendications 1 à 7 **caractérisée en ce que** le câble (2) est doté d'une prise mâle (10) et/ou d'une prise femelle, dans laquelle de préférence l'au moins un élément limiteur de courant (24) est intégré dans la prise mâle (10) et/ou la prise femelle.
